# EUROPÄISCHE PATENTSCHRIFT

(11) **EP 2 755 808 B1**
(45) Veröffentlichungstag und Bekanntmachung des Hinweises auf die Patenterteilung: **12.04.2017**
(21) Anmeldenummer: 12784420.7
(22) Anmeldetag: 17.09.2012
(51) Int. Cl.: B29C 33/02, B29C 33/40, B29C 43/36, B29C 70/46

(54) **BEHEIZBARE BLOCKSTEMPEL-VORRICHTUNG**
HEATABLE BLOCK-PUNCH APPARATUS
SYSTÈME DE POINÇON BLOC CHAUFFABLE

(30) Priorität: 17.09.2011 DE 102011113713
(43) Veröffentlichungstag der Anmeldung: 23.07.2014
(73) Patentinhaber: Piekenbrink Composite GmbH, 88471 Laupheim (DE)
(72) Erfinder: PIEKENBRINK, Björn, 88471 Laupheim (DE); PIEKENBRINK, Olaf, 88471 Laupheim (DE); ÜBERLE, Stefan, 88416 Steinhausen (DE)
(74) Vertreter: Kiessling, Christian
(86) Internationale Anmeldenummer: PCT/DE2012/100284
(87) Internationale Veröffentlichungsnummer: WO 2013/037367

(56) Entgegenhaltungen:
- US-A- 4 167 430
- US-A- 4 271 116
- US-A- 4 624 820
- US-A- 4 889 668
- CARMICHAEL D ET AL: "CONVERTING CASTINGS TO COMPOSITES", MACHINE DESIGN, PENTON MEDIA, CLEVELAND, OH, US, Bd. 61, Nr. 5, 9. März 1989 (1989-03-09), Seiten 133-137, XP000045061, ISSN: 0024-9114

## Beschreibung

Die Erfindung betrifft eine Blockstempel-Vorrichtung mit einem Blockstempel zum Einbringen in eine Aussparung eines aushärtbaren Kompositsubstrats zum Zweck eines Formens eines Innenprofils der Aussparung, wobei die mit dem Blockstempel gefüllte Aussparung mittels eines Deckels verschließbar ist und die Temperatur des aus einem expansionsfähigen elastischen Material erstellten Blockstempels mittels einer Heizeinrichtung einstellbar ist, um eine steuerbare Ausdehnung des Blockstempels und damit einen vorgebbaren Druck der Außenfläche des Blockstempels in Richtung der Innenfläche der Aussparung zu bewirken, wobei im Bereich des Blockstempels mindestens ein Sensor zum Sensieren einer den Druck im Inneren des Blockstempels beschreibenden Messgröße vorgesehen ist und wobei ein operationsgünstiger Operations-Temperaturbereich des Blockstempels vorgegeben ist, um die Temperatur des aushärtbaren Kompositsubstrats innerhalb eines vorgegebenen operablen Temperaturbereiches einzustellen, wobei bei Feststellen einer Ist-Temperatur des Blockstempels seitens mindestens eines Temperatur-Sensors innerhalb des vorgegebenen Operations-Temperaturbereiches eine Änderung der Ist-Temperatur in Richtung einer vorgegebenen optimalen Soll-Temperatur durch entsprechende Änderung der Temperatur der Heizeinrichtung durchführbar ist.

Vakuum-Verpress-Verfahren finden beispielsweise Anwendung in der Vakuumevakuierung, bei dem moderne Kunststoffmaterialien in eine vorherbestimmte Form gebracht und anschließend ausgehärtet werden.

Bei einem Vorgang der Vakuumevakuierung gemäß Stand der Technik wird ein als Formkörper ausgebildetes Werkstück beispielsweise mittels einer Dichtungsfolie und einer die Dichtungsfolie gegenüber einem Formkörper gasdicht abschirmende Dichtschnur von der Umgebungsatmosphäre abgeschirmt bzw. evakuiert und anschließend unter Vakuumdruck gesetzt.

Die im Zusammenhang mit derartigen oder ähnlichen Vorrichtungen angewandten Verfahren weisen indes zum Einen den Nachteil auf, dass eine ausreichende Abdichtung zwischen Dichtungsfolie und Formkörper insbesondere in einem peripheren Bereich der Dichtungsfolie problematisch ist und oft nicht sichergestellt werden kann, weil eine exakte Anbringung einer Dichtungsfolie an einem Formkörper insbesondere bei stark ausgeprägten konkav/konvexen Konturen des Formkörpers nicht immer möglich ist.

Ein weiterer wichtiger Nachteil der bekannten Dichtungsfolien ist ein für viele Anwendungsfälle zu geringer Druckaufbau, im Wege dessen eine tatsächlich herbeiführbare Formgebung eines aushärtbaren Kompositsubstrats deutlich von einer erwünschten Formgebung abweicht.

Eine Vorrichtung der eingangs genannten Art ist aus der Druckschrift US 4 889 668 A1 bekannt.

Ähnliche Vorrichtungen sowie ein Verfahren, die mittels dieser Vorrichtungen realisiert werden sind aus den Druckschriften US 4 271 116 A1 sowie US 4 624 820 A1 bekannt.

Aufgabe der Erfindung ist es, eine passgenau aufbringbare und mehrfach verwendbare Blockstempel-Vorrichtung zu schaffen, mittels derer während eines Vorgangs einer Vakuumverpressung eines aushärtbaren Kompositsubstrats ein deutlich höherer Anpressdruck als mit den bekannten Vorrichtungen ermöglicht ist.

Für eine Blockstempel-Vorrichtung der eingangs genannten Art wird diese Aufgabe erfindungsgemäß dadurch gelöst, dass der mindestens eine Druck-Sensor innerhalb des Materials des Blockstempels angeordnet ist, und ein Temperatur-Sensor vorgesehen ist, um die Temperatur der Heizeinrichtung zu sensieren.

Bevorzugte Ausführungsformen der Erfindung sind Gegenstand der Unteransprüche.

Bei der erfindungsgemäßen Vorrichtung wird durch die Merkmalskombination, dass der mindestens eine Druck-Sensor innerhalb des Materials des Blockstempels angeordnet ist, und ein Temperatur-Sensor vorgesehen ist, um die Temperatur der Heizeinrichtung zu sensieren, in Verbindung mit den Merkmalen des Oberbegriffes des Patentanspruchs 1 erreicht, dass bei gegenüber den bekannten Vorrichtungen zumindest nicht gesteigertem, in der Regel indes gesenktem Energieaufwand ein vielfach gesteigerter Anpressdruck in Richtung eines aushärtbaren Kompositsubstrats erzielbar ist, wodurch eine sehr präzise und qualitativ hochwertige Formgestaltung des aushärtbaren Kompositsubstrats gewährleistet ist.

Dabei ist ein Herausdrücken und Ausgasen von in dem zu verpressenden aushärtbaren Kompositsubstrat eingefangenen Luft- oder Gasbläschen bei der erfindungsgemäßen Blockstempel-Vorrichtung gegenüber den bekannten Vorrichtungen ebenfalls verbessert, da über die Temperatursteuerung des Blockstempels eine Steuerung und dabei insbesondere Erhöhung der Viskosität des in der Regel im Anfangsstadium einer Aushärtung zähflüssigen Kompositsubstrats ermöglicht ist.

Ein weiterer wichtiger Vorteil der erfindungsgemäßen Blockstempel-Vorrichtung ist darin zu sehen, dass der Vorgang des Aushärtens eines Kompositsubstrats durch gezieltes Einstellen einer vorgegebenen Initialtemperatur des Kompositsubstrats in Gang gesetzt werden kann und der Temperaturverlauf während eines Aushärtvorgangs überprüfbar, nötigenfalls einstellbar oder regelbar und in jedem Fall dokumentierbar ist.

Gemäß einer ersten bevorzugten Ausführungsform der erfindungsgemäßen Vorrichtung ist vorgesehen, dass das aushärtbare Kompositsubstrat mindestens teilweise in ein formfestes Hohlchassis eingebettet ist, dessen Innenkontur bei einer temperaturbedingten Ausdehnung des Blockstempels formgebend auf das Außenprofil des aushärtbaren Kompositsubstrat wirkt. Die dem Blockstempel nahe Innenfläche des Deckels kann ebenfalls mit einer an die Formgebung des Blockstempels angepassten Profilierung versehen sein.

Gemäß einer weiteren bevorzugten Ausführungsform der erfindungsgemäßen Vorrichtung ist vorgesehen, dass der Blockstempel aus einem elastischen Elastomer-Kunststoffmaterial wie beispielsweise einem Silikon-Kunststoff hergestellt ist.

Mindestens ein Sensor zum Sensieren einer den Druck im Inneren des Blockstempels beschreibenden Messgröße ist erfindungsgemäß innerhalb des Materials des Blockstempels angeordnet. Dabei ist zu berücksichtigen, dass die im Inneren des Materials des Druckstempels vorliegende Temperatur mit dem im Material des Druckstempels vorherrschenden Druckes über eine materialabhängige charakteristische Kennlinie miteinander verbunden ist. Die Kennlinie kann dabei linear oder nicht-linear verlaufend sein.

Gemäß einer wichtigen bevorzugten Ausführungsform der erfindungsgemäßen Vorrichtung ist daher vorgesehen, dass mindestens ein anderer Temperatur-Sensor vorgesehen ist, um die Temperatur des Materials des Blockstempels zu sensieren.

Eine erste Regeleinrichtung kann vorgesehen sein, um mittels einer Temperaturregelung der Heizeinrichtung die im Material des Blockstempels innerhalb des vorgegebenen Operations-Temperaturbereiches sensierte Ist-Temperatur in Richtung der Soll-Temperatur zu regeln. Bei einem Sensieren einer Temperatur außerhalb des vorgegebenen Operations-Temperaturbereiches ist vorzugsweise ein entsprechendes akustisches oder optisches Signal erzeugbar.

Gemäß einer speziellen bevorzugten Ausführungsform der erfindungsgemäßen Vorrichtung sind etwa fünf Druck-Sensoren vorgesehen, wobei ein erster Druck-Sensor im Bereich der Mitte des Blockstempels angeordnet ist, und vier weitere Druck-Sensoren im Bereich der Ecken des Blockstempels angeordnet sind.

Des weiteren ist bei der erfindungsgemäßen Vorrichtung vorzugsweise ein operationsgünstiger Operations-Druckbereich des Blockstempels vorgebbar, um den Druck auf das aushärtbare Kompositsubstrat innerhalb eines vorgegebenen operablen Druckbereiches einzustellen, wobei bei Feststellen eines Ist-Druckes im Bereich des Blockstempels seitens mindestens eines Druck-Sensors innerhalb des vorgegebenen Operations-Druckbereiches eine Änderung des Ist-Druckes in Richtung eines vorgegebenen optimalen Soll-Druckes durch entsprechende Änderung der Temperatur der Heizeinrichtung durchführbar ist.

Eine zweite Regeleinrichtung kann vorgesehen sein, um mittels einer Temperaturregelung der Heizeinrichtung den im Material des Blockstempels innerhalb des vorgegebenen Operations-Druckbereiches sensierten Ist-Druck in Richtung des Soll-Druckes zu regeln. Bei Feststellen eines Ist-Druckes außerhalb des vorgegebenen Operations-Druckbereiches ist die Temperatur der Heizeinrichtung auf einen vorgegebenen Wert reduzierbar.

Des Weiteren ist vorzugsweise eine elektronische Speichereinrichtung vorgesehen, um die Mehrzahl der während eines Vorgangs des Aushärtens eines Kompositsubstrats mit Hilfe des mindestens einen Temperatur-Sensors und/oder mindestens einen Druck-Sensors am Blockstempel sensierten Ist-Temperaturwerte und/oder Ist-Druckwerte für eine in geprinteter Form ausführbare Dokumentation des Herstellungsvorgangs im Sinne eines Prozessnachweises zu speichern.

Die Heizeinrichtung ist vorzugsweise ausgelegt, um die Temperatur des Blockstempels während eines vorgegebenen Zeitraums auf einen Wert zwischen 80°C und 200°C, insbesondere auf etwa 140°C einzustellen.

Die Heizeinrichtung ist vorzugsweise von einem elektrischen Leiter gebildet, der in das Material des Blockstempels integriert ist. Der elektrische Leiter kann dabei beispielsweise von einem Kupferblech, Kupferdraht oder von einem Kohlefaserfaden gebildet sein, und ist vorzugsweise von Glasfasern ummantelt, das einen Temperaturpuffer zwischen dem aufgeheizten elektrischem Leiter und dem Material des Blockstempels bildet.

Der elektrische Leiter ist vorzugsweise mäanderförmig in dem Material des Blockstempels verlegt. Der elektrische Leiter kann vorzugsweise einen elektrischen Widerstand im Bereich von 20 Ohm bis 60 Ohm bei einer Spannung im Bereich von etwa 260 V aufweisen oder alternativ einen elektrischen Widerstand im Bereich von 2 Ohm bis 20 Ohm bei einer Spannung im Bereich von etwa 48 V aufweisen.

Gemäß einer weiteren wichtigen bevorzugten Ausführungsform der erfindungsgemäßen Vorrichtung ist vorgesehen, dass im Inneren des Blockstempels Hohlräume mit asymmetrischer Formgebung ausgebildet sind, um eine anisotrope Ausdehnung des Blockstempels bei Erwärmung zu bewirken.

Die Hohlräume mit asymmetrischer Formgebung im Inneren des Blockstempels können insbesondere als eine Mehrzahl parallel angeordneter, linear verlaufender Bohrungen ausgebildet sein, in deren Raumbereiche hinein bei Erwärmung des Blockstempels eine innere Ausdehnung des Materials des Blockstempels stattfindet, so dass eine Ausdehnung des Blockstempels senkrecht zu den Bohrungen gegenüber einer Ausdehnung in Richtung der Bohrungen gemindert ist.

Die erfindungsgemäße Blockstempel-Vorrichtung wird im Folgenden anhand einer bevorzugten Ausführungsform erläutert, die in den Figuren der Zeichnung dargestellt ist. Darin zeigen:
- Fig. 1: eine erste bevorzugte Ausführungsform der erfindungsgemäßen Blockstempel-Vorrichtung in einer Querschnittsansicht;

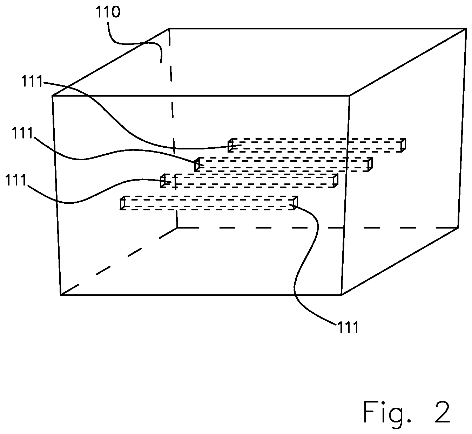

- Fig. 2: den Blockstempel der in Fig. 1 dargestellten Blockstempel-Vorrichtung samt schematisch dargestellter Bohrungen, in einer Ansicht von schräg oben.
- Fig. 3: den Blockstempel der in Fig. 1 dargestellten Blockstempel-Vorrichtung samt schematisch dargestelltem elektrischen Leiter als Heizeinrichtung, in einer Ansicht von oben;
- Fig. 4: eine zweite bevorzugte Ausführungsform der erfindungsgemäßen Blockstempel-Vorrichtung, bei der die Innenfläche des Deckels eine Profilierung aufweist, in einer Querschnittsansicht.

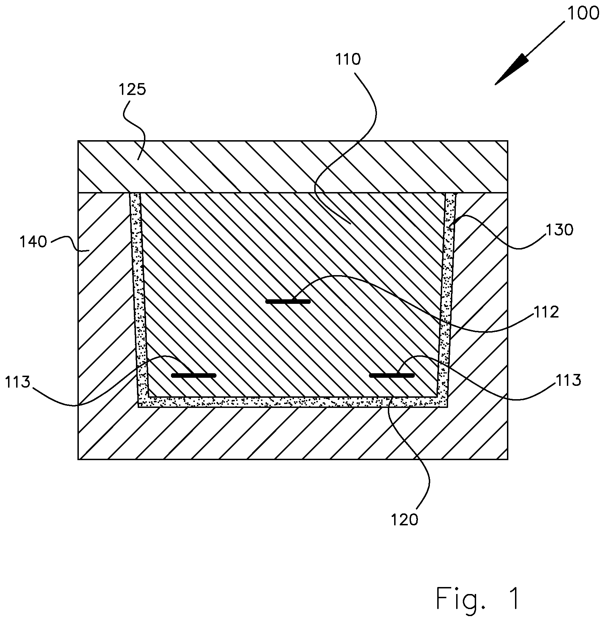

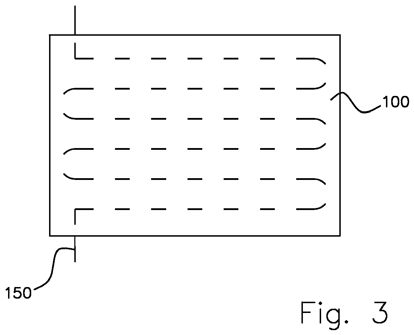

Die in den Figuren 1 und 3 dargestellte erfindungsgemäße Blockstempel-Vorrichtung 100 enthält einen Blockstempel 110 zum Einbringen in eine Aussparung 120 eines aushärtbaren Kompositsubstrats 130 zum Zweck eines Formens eines Innenprofils der Aussparung 120.

Die Aussparung 120 ist mittels eines Deckels 125 verschließbar, und die Temperatur des aus einem elastischen Material erstellten Blockstempels 110 ist mittels einer Heizeinrichtung einstellbar, um eine steuerbare Ausdehnung des Blockstempels 110 und damit einen vorgebbaren Druck der Außenfläche des Blockstempels 110 in Richtung der Innenfläche der Aussparung 120 zu bewirken.

Das aushärtbare Kompositsubstrat 130 ist in ein formfestes Hohlchassis 140 eingebettet, dessen Innenkontur bei einer temperaturbedingten Ausdehnung des Blockstempels 110 formgebend auf das Außenprofil des aushärtbaren Kompositsubstrat 130 wirkt.

Das Kompositsubstrat 130 enthält ein Fasergewebe und eine in das Fasergewebe eingebrachte Matrix eines aushärtbaren viskosen Füllmaterials, wohingegen der Blockstempel 110 aus einem elastischen Silikon-Kunststoffmaterial erstellt ist.

Ein erster Temperatur-Sensor 111 ist vorgesehen, um die Temperatur der Heizeinrichtung 150 zu sensieren.

Des Weiteren ist ein anderer Temperatur-Sensor 112 vorgesehen, um die Temperatur des Materials des Blockstempels 110 zu sensieren.

Ein operationsgünstiger Operations-Temperaturbereich des Blockstempels 110 ist vorgebbar, um die Temperatur des aushärtbaren Kompositsubstrats 130 innerhalb eines vorgegebenen operablen Temperaturbereiches einzustellen, wobei bei Feststellen einer Ist-Temperatur des Blockstempels seitens mindestens eines Temperatur-Sensors 112 innerhalb des vorgegebenen Operations-Temperaturbereiches eine Änderung der Ist-Temperatur in Richtung einer vorgegebenen optimalen Soll-Temperatur durch entsprechende Änderung der Temperatur der Heizeinrichtung 150 durchführbar ist.

Eine als elektronische Schaltung ausgeführte erste Regeleinrichtung ist vorgesehen, um mittels einer Temperaturregelung der Heizeinrichtung 150 die im Material des Blockstempels 110 innerhalb des vorgegebenen Operations-Temperaturbereiches sensierte Ist-Temperatur in Richtung der Soll-Temperatur zu regeln.

Bei einem Sensieren einer Temperatur außerhalb des vorgegebenen Operations-Temperaturbereiches ist mit Hilfe einer entsprechenden Einrichtung ein akustisches oder optisches Signal erzeugbar.

Eine Mehrzahl innerhalb des Blockstempels 110 verteilter Druck-Sensoren 113 ist vorgesehen, um den Druck im Material des Blockstempels 110 zu sensieren, wobei jeder Druck-Sensor 113 innerhalb des Materials des Blockstempels 110 angeordnet ist.

Ein operationsgünstiger Operations-Druckbereich des Blockstempels 110 ist vorgebbar, um den Druck auf das aushärtbare Kompositsubstrat 130 innerhalb eines vorgegebenen operablen Druckbereiches einzustellen, wobei bei Feststellen eines Ist-Druckes im Bereich des Blockstempels 110 seitens mindestens eines Druck-Sensors 113 innerhalb des vorgegebenen Operations-Druckbereiches eine Änderung des Ist-Druckes in Richtung eines vorgegebenen optimalen Soll-Druckes durch entsprechende Änderung der Temperatur der Heizeinrichtung 150 durchführbar ist.

Eine nicht dargestellte, als elektronische Schaltung ausgeführte zweite Regeleinrichtung ist vorgesehen, um mittels einer Temperaturregelung der Heizeinrichtung 150 den im Material des Blockstempels 110 innerhalb des vorgegebenen Operations-Druckbereiches sensierten Ist-Druck in Richtung des Soll-Druckes zu regeln.

Bei Feststellen eines Ist-Druckes außerhalb des vorgegebenen Operations-Druckbereiches ist die Temperatur der Heizeinrichtung 150 auf einen vorgebbaren Wert reduzierbar.

Eine nicht dargestellte elektronische Speichereinrichtung ist vorgesehen, um die Mehrzahl der während eines Vorgangs des Aushärtens eines Kompositsubstrats mit Hilfe des mindestens einen Temperatur-Sensors 112 und/oder mindestens einen Druck-Sensors 113 am Blockstempel 110 sensierten Ist-Temperaturwerte und/oder Ist-Druckwerte für eine in geprinteter Form ausführbare Dokumentation des Herstellungsvorgangs im Sinne eines Prozessnachweises zu speichern.

Die Heizeinrichtung ist ausgelegt, um die Temperatur des Blockstempels 110 während eines vorgegebenen Zeitraums auf einen Wert von etwa 140°C einzustellen, und ist von einem mäanderförmig ausgelegten elektrischen Leiter 150 aus Kupferdraht gebildet, der von Glasfasern ummantelt in das Material des Blockstempels 110 integriert ist.

Der Kupferdraht weist bei einer Spannung im Bereich von etwa 48 V einen elektrischen Widerstand im Bereich von 2 Ohm auf.

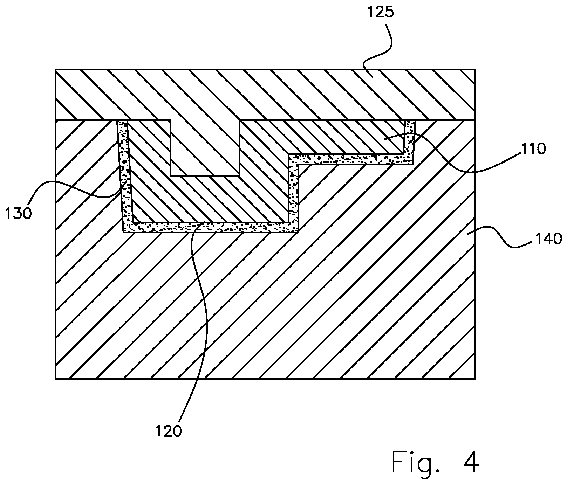

Figur 4 zeigt eine alternative bevorzugte Ausführungsform der erfindungsgemäßen Blockstempel-Vorrichtung, bei der die dem Blockstempel 110 nahe Innenfläche des Deckels 125 eine an die Formgebung des Blockstempels 110 angepasste Profilierung aufweist.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Blockstempel-Vorrichtung (100) mit einem Blockstempel (110) zum Einbringen in eine Aussparung (120) eines aushärtbaren Kompositsubstrats (130) zum Zweck eines Formens eines Innenprofils der Aussparung (120), wobei die mit dem Blockstempel (110) gefüllte Aussparung (120) mittels eines Deckels (125) verschließbar ist und die Temperatur des aus einem expansionsfähigen elastischen Material erstellten Blockstempels (110) mittels einer Heizeinrichtung (150) einstellbar ist, um eine steuerbare Ausdehnung des Blockstempels (110) und damit einen vorgebbaren Druck der Außenfläche des Blockstempels (110) in Richtung der Innenfläche der Aussparung (120) zu bewirken, wobei im Bereich des Blockstempels mindestens ein Sensor (113) zum Sensieren einer den Druck im Inneren des Blockstempels (110) beschreibenden Messgröße vorgesehen ist und wobei ein operationsgünstiger Operations-Temperaturbereich des Blockstempels (110) vorgegeben ist, um die Temperatur des aushärtbaren Kompositsubstrats (130) innerhalb eines vorgegebenen operablen Temperaturbereiches einzustellen, wobei bei Feststellen einer Ist-Temperatur des Blockstempels seitens mindestens eines Temperatur-Sensors (112) innerhalb des vorgegebenen Operations-Temperaturbereiches eine Änderung der Ist-Temperatur in Richtung einer vorgegebenen optimalen Soll-Temperatur durch entsprechende Änderung der Temperatur der Heizeinrichtung (150) durchführbar ist, **dadurch gekennzeichnet, dass** der mindestens eine Druck-Sensor (113) innerhalb des Materials des Blockstempels (110) angeordnet ist, und ein Temperatur-Sensor (111) vorgesehen ist, um die Temperatur der Heizeinrichtung (150) zu sensieren.

2. Vorrichtung nach Anspruch 1, **dadurch gekennzeichnet, dass** das aushärtbare Kompositsubstrat (130) mindestens teilweise in ein formfestes Hohlchassis (140) eingebettet ist, dessen Innenkontur bei einer temperaturbedingten Ausdehnung des Blockstempels (110) formgebend auf das Außenprofil des aushärtbaren Kompositsubstrat (130) wirkt.

3. Vorrichtung nach einem der vorhergehenden Ansprüche, **dadurch gekennzeichnet, dass** die dem Blockstempel (110) nahe Innenfläche des Deckels (125) eine an die Formgebung des Blockstempels (110) angepasste Profilierung aufweist.

4. Vorrichtung nach einem der vorhergehenden Ansprüche, **dadurch gekennzeichnet, dass** der Blockstempel (110) aus einem elastischen Elastomer-Kunststoffmaterial erstellt ist.

5. Vorrichtung nach einem der vorhergehenden Ansprüche, **dadurch gekennzeichnet, dass** das elastische Elastomer-Kunststoffmaterial von einem Silikon-Kunststoff gebildet ist.

6. Vorrichtung nach einem der vorhergehenden Ansprüche, **dadurch gekennzeichnet, dass** mindestens ein anderer Temperatur-Sensor (112) vorgesehen ist, um die Temperatur des Materials des Blockstempels (110) zu sensieren.

7. Vorrichtung nach einem der vorhergehenden Ansprüche, **dadurch gekennzeichnet, dass** eine erste Regeleinrichtung vorgesehen ist, um mittels einer Temperaturregelung der Heizeinrichtung (150) die im Material des Blockstempels (110) innerhalb des vorgegebenen Operations-Temperaturbereiches sensierte Ist-Temperatur in Richtung der Soll-Temperatur zu regeln.

8. Vorrichtung nach Anspruch 7, **dadurch gekennzeichnet, dass** bei einem Sensieren einer Temperatur außerhalb des vorgegebenen Operations-Temperaturbereiches ein entsprechendes akustisches oder optisches Signal erzeugbar ist.

9. Vorrichtung nach einem der vorhergehenden Ansprüche, **dadurch gekennzeichnet, dass** etwa fünf Druck-Sensoren (113) vorgesehen sind, wobei ein erster Druck-Sensor im Bereich der Mitte des Blockstempels (110) angeordnet ist, und vier weitere Druck-Sensoren im Bereich der Ecken des Blockstempels (110) angeordnet sind.

10. Vorrichtung nach Anspruch 9, **dadurch gekennzeichnet, dass** ein operationsgünstiger Operations-Druckbereich des Blockstempels (110) vorgegeben ist, um den Druck auf das aushärtbare Kompositsubstrat (130) innerhalb eines vorgegebenen operablen Druckbereiches einzustellen, wobei bei Feststellen eines Ist-Druckes im Bereich des Blockstempels (110) seitens mindestens eines Druck-Sensors (113) innerhalb des vorgegebenen Operations-Druckbereiches eine Änderung des Ist-Druckes in Richtung eines vorgegebenen optimalen Soll-Druckes durch entsprechende Änderung der Temperatur der Heizeinrichtung (150) durchführbar ist.

11. Vorrichtung nach Anspruch 10, **dadurch gekennzeichnet, dass** eine zweite Regeleinrichtung vorgesehen ist, um mittels einer Temperaturregelung der Heizeinrichtung (150) den im Material des Blockstempels (110) innerhalb des vorgegebenen Operations-Druckbereiches sensierten Ist-Druck in Richtung des Soll-Druckes zu regeln.

12. Vorrichtung nach Anspruch 11, **dadurch gekennzeichnet, dass** bei Feststellen eines Ist-Druckes außerhalb des vorgegebenen Operations-Druckbereiches die Temperatur der Heizeinrichtung (150) auf einen vorgegebenen Wert reduzierbar ist.

13. Vorrichtung nach einem der vorhergehenden Ansprüche, **dadurch gekennzeichnet, dass** eine elektronische Speichereinrichtung vorgesehen ist, um die Mehrzahl der während eines Vorgangs des Aushärtens eines Kompositsubstrats mit Hilfe des mindestens einen Temperatur-Sensors (112) und/oder mindestens einen Druck-Sensors (113) am Blockstempel (110) sensierten Ist-Temperaturwerte und/oder Ist-Druckwerte für eine in geprinteter Form ausführbare Dokumentation des Herstellungsvorgangs im Sinne eines Prozessnachweises zu speichern.

14. Vorrichtung nach einem der vorhergehenden Ansprüche, **dadurch gekennzeichnet, dass** die Heizeinrichtung (150) ausgelegt ist, um die Temperatur der Blockstempels (110) während eines vorgegebenen Zeitraums auf einen Wert zwischen 80°C und 200°C einzustellen.

15. Vorrichtung nach einem der vorhergehenden Ansprüche, **dadurch gekennzeichnet, dass** die Heizeinrichtung (150) von einem elektrischen Leiter (150) gebildet ist, der in das Material des Blockstempels (110) integriert ist.

## Claims

1. Block-punch apparatus (100) with a block punch (110) for introducing into a recess (120) in a curable composite substrate (130) for the purpose of shaping an inner profile of the recess (120), wherein the recess (120) filled with the block punch (110) can be closed by means of a cover (125) and the temperature of the block punch (110), which is produced from an expandable elastic material, can be set by means of a heating device (150), in order to bring about a controllable expansion of the block punch (110) and consequently a predeterminable pressure of the outer surface of the block punch (110) in the direction of the inner surface of the recess (120), wherein at least one sensor (113) for sensing a measured variable describing the pressure in the interior of the block punch (110) is provided in the region of the block punch and wherein an operationally favourable operating temperature range of the block punch (110) is predetermined, in order to set the temperature of the curable composite substrate (130) within a predetermined operable temperature range, wherein, when an actual temperature of the block punch within the predetermined operating temperature range is established by at least one temperature sensor (112), a change of the actual temperature in the direction of a predetermined optimum setpoint temperature can be brought about by correspondingly changing the temperature of the heating device (150), **characterized in that** the at least one pressure sensor (113) is arranged within the material of the block punch (110), and a temperature sensor (111) is provided in order to sense the temperature of the heating device (150).

2. Apparatus according to Claim 1, **characterized in that** the curable composite substrate (130) is embedded at least partially in a dimensionally stable hollow chassis (140), the inner contour of which acts in a shaping manner on the outer profile of the curable composite substrate (130) when there is a temperature-induced expansion of the block punch (110).

3. Apparatus according to one of the preceding claims, **characterized in that** the inner surface of the cover (125) that is near the block punch (110) has a profiling adapted to the shaping of the block punch (110).

4. Apparatus according to one of the preceding claims, **characterized in that** the block punch (110) is produced from an elastic elastomer-polymer material.

5. Apparatus according to one of the preceding claims, **characterized in that** the elastic elastomer-polymer material is formed by a silicone polymer.

6. Apparatus according to one of the preceding claims, **characterized in that** at least one other temperature sensor (112) is provided, in order to sense the temperature of the material of the block punch (110).

7. Apparatus according to one of the preceding claims, **characterized in that** a first control device is provided, in order to control the actual temperature sensed in the material of the block punch (110) within the predetermined operating temperature range in the direction of the setpoint temperature by means of controlling the temperature of the heating device (150).

8. Apparatus according to Claim 7, **characterized in that**, when a temperature outside the predetermined operating temperature range is sensed, a corresponding acoustic or optical signal can be generated.

9. Apparatus according to one of the preceding claims, **characterized in that** approximately five pressure sensors (113) are provided, wherein a first pressure sensor is arranged in the region of the middle of the block punch (110), and four further pressure sensors are arranged in the region of the corners of the block punch (110).

10. Apparatus according to Claim 9, **characterized in that** an operationally favourable operating pressure range of the block punch (110) is predetermined, in order to set the pressure on the curable composite substrate (130) within a predetermined operable pressure range, wherein, when an actual pressure in the region of the block punch (110) within the predetermined operating pressure range is established by at least one pressure sensor (113), a change of the actual pressure in the direction of a predetermined optimum setpoint pressure can be carried out by correspondingly changing the temperature of the heating device (150).

11. Apparatus according to Claim 10, **characterized in that** a second control device is provided, in order to control the actual pressure sensed in the material of the block punch (110) within the predetermined operating pressure range in the direction of the setpoint pressure by means of controlling the temperature of the heating device (150).

12. Apparatus according to Claim 11, **characterized in that**, when an actual pressure outside the predetermined operating pressure range is established, the temperature of the heating device (150) can be reduced to a predetermined value.

13. Apparatus according to one of the preceding claims, **characterized in that** an electronic memory device is provided, in order to store the plurality of actual temperature values and/or actual pressure values sensed during a process of curing a composite substrate with the aid of the at least one temperature sensor (112) and/or at least one pressure sensor (113) on the block punch (110) for a documentation, which can be carried out in a printed form, of the production process in the sense of a process record.

14. Apparatus according to one of the preceding claims, **characterized in that** the heating device (150) is designed to set the temperature of the block punch (110) to a value between 80°C and 200°C during a predetermined time period.

15. Apparatus according to one of the preceding claims, **characterized in that** the heating device (150) is formed by an electrical conductor (150), which is integrated in the material of the block punch (110).

## Revendications

1. Dispositif de poinçon bloc (100) comprenant un poinçon bloc (110) destiné à être introduit dans un évidement (120) ménagé dans un substrat composite (130) durcissable afin de former un profil intérieur de l'évidement (120), l'évidement (120) occupé par le poinçon bloc (110) pouvant être fermé par un couvercle (125), et la température du poinçon bloc (110) constitué d'un matériau élastique expansible pouvant être régulée au moyen d'un équipement de chauffage (150) afin d'engendrer une dilatation commandable du poinçon bloc (110) et ainsi une pression prédéterminable de la surface extérieure du poinçon bloc (110) en direction de la surface intérieure de l'évidement (120), cependant que, dans la zone du poinçon bloc, au moins un capteur (113) destiné à saisir une grandeur de mesure décrivant la pression régnant à l'intérieur du poinçon bloc (110) est prévu, et cependant qu'une plage de température d'opération du poinçon bloc (110) favorable à une opération est prédéterminée afin de réguler dans les limites d'une plage prédéterminée de températures favorable à une opération la température du substrat composite (130) durcissable, cependant que, dans le cas d'une constatation d'une température réelle du poinçon bloc par au moins un capteur de température (112) dans les limites de la plage prédéterminée de températures d'opération, une modification de la température réelle en direction d'une température optimale souhaitée prédéterminée peut être effectuée par modification correspondante de la température de l'équipement de chauffage (150), **caractérisé en ce que** le au moins un capteur de pression (113) est agencé à l'intérieur du matériau du poinçon bloc (110), et **en ce qu'**un capteur de température (111) est prévu pour saisir la température de l'équipement de chauffage (150).

2. Dispositif selon la revendication 1, **caractérisé en ce que** le substrat composite (130) durcissable est incorporé au moins partiellement dans un châssis creux (140) indéformable dont le contour intérieur agit de telle manière sur le profil extérieur du substrat composite (130) durcissable qu'il lui donne une forme quand le poinçon bloc (110) se dilate sous l'effet de la température.

3. Dispositif selon une des revendications précédentes, **caractérisé en ce que** la surface intérieure du couvercle (125) située à proximité du poinçon bloc (110) comporte un profilage adapté à la forme conférée au poinçon bloc (110).

4. Dispositif selon une des revendications précédentes, **caractérisé en ce que** le poinçon bloc (110) est constitué d'un matériau en matière plastique élastomère élastique.

5. Dispositif selon une des revendications précédentes, **caractérisé en ce que** le matériau en matière plastique élastomère consiste en une matière plastique en silicone.

6. Dispositif selon une des revendications précédentes, **caractérisé en ce qu'**au moins un autre capteur de température (112) est prévu pour saisir la température du matériau du poinçon bloc (110).

7. Dispositif selon une des revendications précédentes, **caractérisé en ce qu'**un premier équipement de régulation est prévu pour, au moyen d'une régulation de température de l'équipement de chauffage (150), réguler en direction de la température souhaitée la température réelle saisie dans les limites de la plage prédéterminée de températures d'opération dans le matériau du poinçon bloc (110).

8. Dispositif selon la revendication 7, **caractérisé en ce que**, quand il y a saisie d'une température ne se trouvant pas dans les limites de la plage prédéterminée de températures d'opération, un signal acoustique ou optique correspondant peut être généré.

9. Dispositif selon une des revendications précédentes, **caractérisé en ce qu'**environ cinq capteurs de pression (113) sont prévus, un premier capteur de pression étant agencé dans la zone du milieu du poinçon bloc (110), et quatre autres capteurs de pression étant agencés dans la zone des angles du poinçon bloc (110).

10. Dispositif selon la revendication 9, **caractérisé en ce qu'**une plage de pressions d'opération du poinçon bloc (110) favorable à une opération est prédéterminée afin de réguler dans les limites d'une plage de pressions prédéterminée appropriée à une opération la pression exercée sur le substrat composite (130) durcissable, cependant que, dans le cas d'une constatation d'une pression réelle dans la zone du poinçon bloc (110) par au moins un capteur de pression (113) dans les limites de la plage prédéterminée de pression d'opération, une modification de la pression réelle en direction d'une pression optimale souhaitée prédéterminée peut être effectuée par modification correspondante de la température de l'équipement de chauffage (150).

11. Dispositif selon la revendication 10, **caractérisé en ce qu'**un deuxième équipement de régulation est prévu afin de, par une régulation de température de l'équipement de chauffage (150), réguler en direction de la pression souhaitée la pression réelle saisie dans le matériau du poinçon bloc (110) dans les limites de la plage prédéterminée de pressions d'opération.

12. Dispositif selon la revendication 11, **caractérisé en ce que**, dans le cas d'une constatation d'une pression réelle ne se trouvant pas dans les limites de la plage prédéterminée de pressions d'opération, la température de l'équipement de chauffage (150) peut être réduite à une valeur prédéterminée.

13. Dispositif selon une des revendications précédentes, **caractérisé en ce qu'**un équipement électronique de mémorisation est prévu pour mémoriser la majorité des valeurs de température et/ou valeurs de pression saisies au poinçon bloc (110) durant un processus du durcissement d'un substrat composite à l'aide du au moins un capteur de température (112) et/ou du au moins un capteur de pression (113), aux fins d'une documentation du processus de fabrication, au sens d'une justification de procédé, pouvant être réalisée sous forme imprimée.

14. Dispositif selon une des revendications précédentes, **caractérisé en ce que** l'équipement de chauffage (150) est conçu pour réguler la température du poinçon bloc (110) sur une valeur située entre 80° et 200° durant un laps de temps prédéterminé.

15. Dispositif selon une des revendications précédentes, **caractérisé en ce que** l'équipement de chauffage (150) consiste en un conducteur électrique (150) intégré dans le matériau du poinçon bloc (110).
